# EUROPEAN PATENT APPLICATION

(11) **EP 4 498 628 A2**
(43) Date of publication of application: **29.01.2025**
(21) Application number: 24212025.1
(22) Date of filing: 05.02.2020
(51) Int. Cl.: H04L 5/00

(54) **COMMUNICATION DEVICE, CONTROL METHOD FOR COMMUNICATION DEVICE, AND PROGRAM**

(30) Priority: 28.02.2019 JP 2019036403
(62) Divisional of application: 20763969.1
(71) Applicant: Canon Kabushiki Kaisha, Ohta-ku Tokyo 146-8501 (JP)
(72) Inventor: YUKAWA, Mitsuyoshi, Tokyo, 146-8501 (JP)
(74) Representative: Canon Europe Limited

(57) **Abstract**

A communication device communicates a physical (PHY) frame including a preamble and a data field. The preamble includes a Legacy Short Training Field (L-STF), a Legacy Long Training Field (L-LTF), a Legacy Signal Field (L-SIG), as a first Signal Field, arranged immediately after the L-LTF in the frame, a Repeated Legacy Signal Field (RL-SIG), as a second Signal Field, arranged immediately after the L-SIG in the frame, a third Signal Field arranged after the RL-SIG in the frame, a fourth Signal Field arranged immediately after the third Signal Field in the frame, a second Short Training Field arranged immediately after the fourth Signal Field in the frame, and a second Long Training Field arranged immediately after the second Short Training Field. The fourth Signal Field includes a User field, which includes at least a subfield indicating numbers of spatial streams allocated to each of two or more other communication devices that communicate with the communication device. The subfield is comprised of consecutive 6 bits, and a sum of the numbers of spatial streams is larger than 8.

## Description

### TECHNICAL FIELD

The present invention relates to a communication control technique in a wireless LAN.

### BACKGROUND ART

The Internet usage has recently increased year by year along with the development of information communication technologies, and various communication techniques have been developed to cope with an increase in demand. In particular, wireless local area network (wireless LAN) techniques implement throughput improvement in Internet communications for packet data, audio, video, and the like by wireless LAN terminals, and various technological developments have still been conducted actively.

In the development of wireless LAN techniques, a lot of standardization works by the IEEE (Institute of Electrical and Electronics Engineers) 802, which is a standardization organization for wireless LAN techniques, play an important role. As one of the wireless LAN communication standards, the IEEE802.11 standards are known, including standards such as IEEE802.11n/a/b/g/ac and IEEE802.11ax. For example, IEEE802.11ax implements a high peak throughput of up to 9.6 gigabits per second (Gbps) and additionally improves the communication speed under a congestion situation using OFDMA (Orthogonal frequency-division multiple access) (PTL 1).

Recently, in order to further improve throughput, a study group called IEEE802.11EHT (Extremely High Throughput) has been formed as a successor standard of IEEE802.11ax. One of measures for throughput improvement that is a target for the IEEE802.11EHT is increasing the number of spatial streams of the MIMO (Multi-Input Multi-Output) method. The MIMO is a method of improving a channel resource use efficiency in a wireless communication network formed by an access point (AP) and a station (STA) that is a wireless LAN terminal by forming a plurality of spatial streams using a plurality of antennas and performing communication. If there is a single STA, the method is called SU-MIMO (Single-User MIMO). If a plurality of STAs exist, the method is called MU-MIMO (Multi-User MIMO). The MIMO has proliferated as a technique for a next-generation communication system in recent years, and is employed in the IEEE802.11 standards as well. For example, in IEEE802.11ax, the method is adaptable to eight spatial streams (SS) at maximum. In IEEE802.11EHT, increasing the maximum number of spatial streams to 16 has been examined. When the number of spatial streams is increased, the space use efficiency further improves, and throughput improvement can be implemented.

### CITATION LIST

### PATENT LITERATURE

PTL 1: Japanese Patent Laid-Open No. 2018-50133

### SUMMARY OF INVENTION

### TECHNICAL PROBLEM

As described above, in the IEEE802.11EHT, the maximum number of spatial streams is assumed to be set to 16. However, in the conventional standards for a wireless LAN, a mechanism that notifies each STA of information concerning allocation of the number of spatial streams in a case in which the total number of spatial streams allocated to one or more STAs (wireless LAN terminals) becomes larger than 8 has not been defined.

In consideration of the above-described problem, the present invention provides a mechanism configured to notify one or more wireless LAN terminals of allocation of the number of spatial streams, which is larger than 8 in total.

### SOLUTION TO PROBLEM

A communication device according to one aspect of the present invention has the following characteristic features. That is, there is provided
a communication device including transmission means for transmitting a physical (PHY) frame including a preamble and a data field, characterized in that
the preamble includes:
   a Legacy Short Training Field (L-STF);
   a Legacy Long Training Field (L-LTF) arranged immediately after the L-STF in the frame;
   a Legacy Signal Field (L-SIG) arranged immediately after the L-LTF in the frame;
   a first EHT (Extremely High Throughput) Signal Field (EHT-SIG-A) arranged after the L-SIG in the frame;
   a second EHT Signal Field (EHT-SIG-B) arranged immediately after the EHT-SIG-A in the frame;
   an EHT Short Training Field (EHT-STF) arranged immediately after the EHT-SIG-B in the frame; and
   an EHT Long Training Field (EHT-LTF) arranged immediately after the EHT-STF in the frame, and
   the EHT-SIG-B includes a subfield indicating the number of spatial streams allocated to each of not less than one other communication device that communicates with the communication device, and the sum of the numbers of spatial streams is larger than 8.

### ADVANTAGEOUS EFFECTS OF INVENTION

According to the present invention, there is provided a mechanism configured to notify one or more wireless LAN terminals of allocation of the number of spatial streams, which is larger than 8 in total.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a network;
Fig. 2 is a block diagram showing an example of the functional configuration of an AP;
Fig. 3 is a block diagram showing an example of the hardware configuration of the AP;
Fig. 4 is a flowchart showing processing executed by the AP;
Fig. 5 is a sequence chart showing processing executed in a wireless communication network;
Fig. 6 is a view showing an example of the PHY frame structure of a PPDU used in the embodiment;
Fig. 7 is a view showing the configuration in an EHT-SIG-B field;
Fig. 8 is a view showing an example of the correspondence between a Spatial Configuration subfield and the number of spatial streams of each STA; and
Fig. 9 is a view showing another example of the correspondence between the Spatial Configuration subfield and the number of spatial streams of each STA.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

### <First Embodiment>

### (Network Configuration)

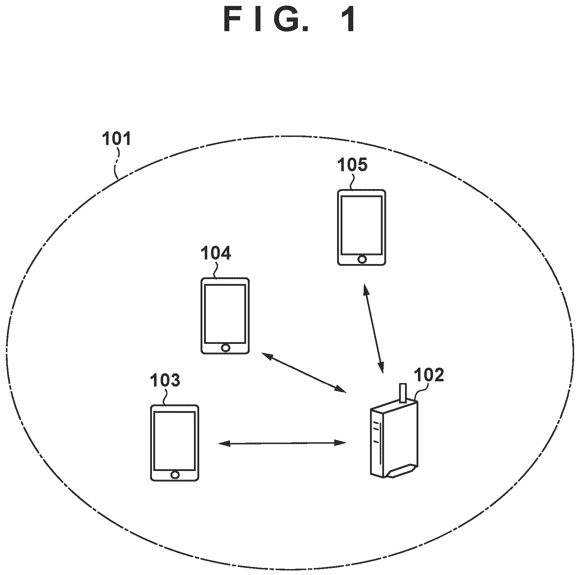

Fig. 1 shows an example of the configuration of a wireless communication network according to this embodiment. This wireless communication network is configured to include one access point (AP 102) and three STAs (STA 103, STA 104, and STA 105) as devices (EHT devices) complying with the IEEE802.11EHT (Extremely High Throughput) standard. Note that it may be understood that EHT is an acronym of Extremely High Throughput. The AP 102 can be considered as one form of an STA because it has the same functions as the STAs 103 to 105 except that it has a relay function. STAs located in a circle 101 representing the area where a signal transmitted from the AP 102 reaches can communicate with the AP 102. The AP 102 communicates with the STAs 103 to 105 in accordance with the wireless communication method of the IEEE802.11EHT standard. The AP 102 can establish a radio link with each of the STAs 103 to 105 via connection processing such as an association process complying with a standard of the IEEE802.11 series.

Note that the configuration of the wireless communication network shown in Fig. 1 is merely an example for the description and, for example, a network including many EHT devices and legacy devices (communication devices complying with the IEEE802.11a/b/g/n/ax standards) in a wider area may be formed. Also, the arrangement of the communication devices is not limited to that shown in Fig. 1, and the following argument is applicable to various positional relationships of the communication devices as well.

### (Configuration of AP)

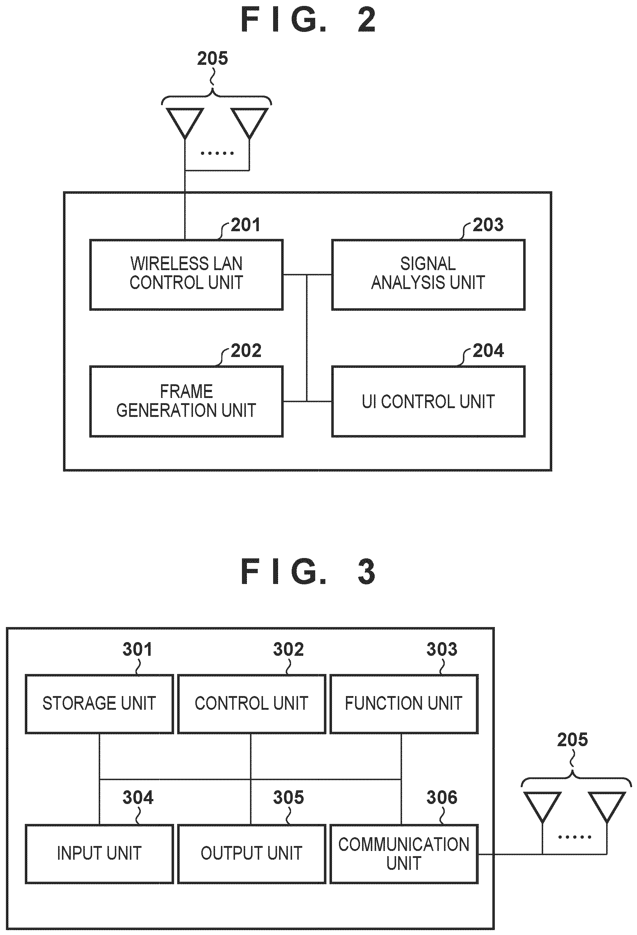

Fig. 2 is a block diagram showing the functional configuration of the AP 102. The AP 102 includes, as an example of its functional configuration, a wireless LAN control unit 201, a frame generation unit 202, a signal analysis unit 203, and a UI (User Interface) control unit 204.

The wireless LAN control unit 201 can be configured to include one or more antennas 205 and circuits configured to transmit/receive a radio signal (radio frame) to/from another wireless LAN device, and a program configured to control these. The wireless LAN control unit 201 executes communication control of the wireless LAN based on a frame generated by the frame generation unit 202 in accordance with the standard of the IEEE802.11 series.

The frame generation unit 202 generates a frame to be transmitted by the wireless LAN control unit 201 based on the result of analysis performed by the signal analysis unit 203 for a signal received by the wireless LAN control unit 201. The frame generation unit 202 may create a frame without depending on the analysis result of the signal analysis unit 203. The signal analysis unit 203 analyzes a signal received by the wireless LAN control unit 201. The UI control unit 204 accepts an operation by the user (not shown) of the AP 102 on an input unit 304 (Fig. 3), and performs control of transmitting a control signal corresponding to the operation to each constituent element or controls output (including display and the like) for an output unit 305 (Fig. 3).

Fig. 3 shows the hardware configuration of the AP 102 according to this embodiment. The AP 102 includes, as an example of its hardware configuration, a storage unit 301, a control unit 302, a function unit 303, the input unit 304, the output unit 305, a communication unit 306, and the one or more antennas 205.

The storage unit 301 is formed by both of a ROM and a RAM or one of them, and stores programs for performing various kinds of operations to be described later and various kinds of information such as communication parameters for wireless communication. Note that other than the memories such as a ROM and a RAM, a storage medium such as a flexible disk, a hard disk, an optical disk, a magnetooptical disk, a CD-ROM, a CD-R, a magnetic tape, a nonvolatile memory card, or a DVD may be used as the storage unit 301.

The control unit 302 is formed by, for example, a processor such as a CPU or an MPU, an ASIC (Application Specific Integrated Circuit), a DSP (Digital Signal Processor), an FPGA (Field Programmable Gate Array), or the like. Here, CPU is an acronym of Central Processing Unit, and MPU is an acronym of Micro Processing Unit. The control unit 302 executes the programs stored in the storage unit 301, thereby controlling the entire AP 102. Note that the control unit 302 may control the entire AP 102 by cooperation of the programs stored in the storage unit 301 and an OS (Operating System).

In addition, the control unit 302 controls the function unit 303 to execute predetermined processing such as image capturing, printing, or projection. The function unit 303 is hardware used by the AP 102 to execute predetermined processing. For example, if the AP 102 is a camera, the function unit 303 is an image capturing unit and performs image capturing processing. For example, if the AP 102 is a printer, the function unit 303 is a printing unit and performs print processing. For example, if the AP 102 is a projector, the function unit 303 is a projection unit and performs projection processing. Data to be processed by the function unit 303 may be data stored in the storage unit 301, or may be data communicated with an STA or another AP via the communication unit 306 to be described later.

The input unit 304 accepts various kinds of operations from a user. The output unit 305 performs various kinds of outputs for the user. Here, the output by the output unit 305 includes at least one of display on a screen, audio output by a loudspeaker, vibration output, and the like. Note that both the input unit 304 and the output unit 305 may be implemented by one module, like a touch panel.

The communication unit 306 controls wireless communication complying with the IEEE802.11EHT standard, or controls wireless communication complying with Wi-Fi or IP (Internet Protocol) communication. Also, the communication unit 306 controls the one or more antennas 205 to transmit/receive radio signals for wireless communication. The AP 102 communicates contents such as image data, document data, and video data with another communication device via the communication unit 306.

### (Configuration of STA)

The functional configuration and the hardware configuration of the STAs 103 to 105 are the same as the functional configuration (Fig. 2) and the hardware configuration (Fig. 3) of the AP 102 described above, respectively. That is, each of the STAs 103 to 105 can be configured to include, as its functional configuration, the wireless LAN control unit 201, the frame generation unit 202, the signal analysis unit 203, and the UI control unit 204 and include, as its hardware configuration, the storage unit 301, the control unit 302, the function unit 303, the input unit 304, the output unit 305, the communication unit 306, and the one or more antennas 205.

### (Procedure of Processing)

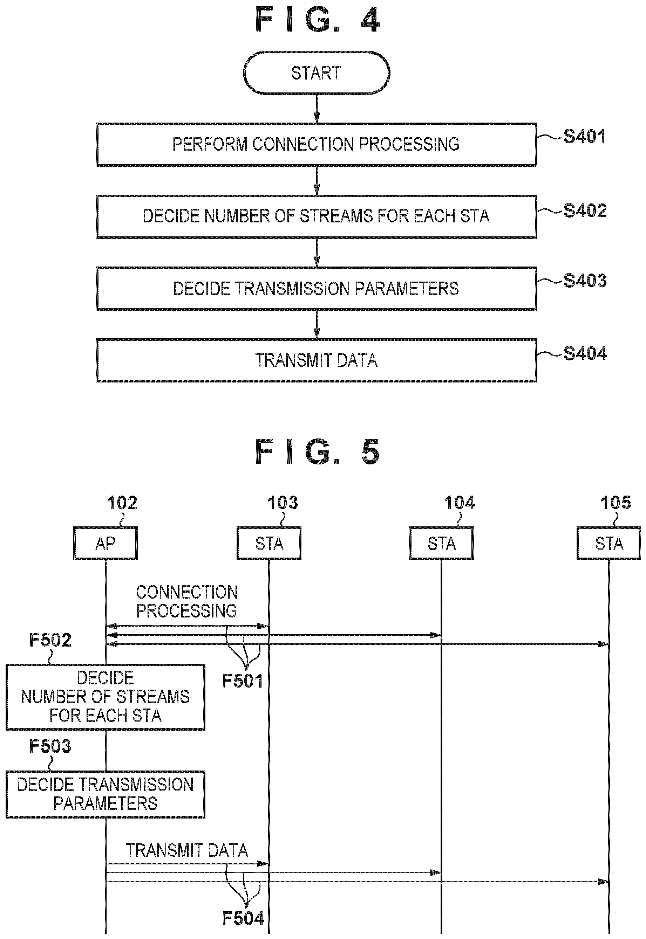

Next, the procedure of processing executed by the AP 102 configured as described above and the sequence of processing executed by the wireless communication system shown in Fig. 1 will be described with reference to Figs. 4 and 5. Fig. 4 is a flowchart showing processing executed by the AP 102. The flowchart shown in Fig. 4 can be implemented when the control unit 302 of the AP 102 executes a control program stored in the storage unit 301 and executes calculation and processing of information and control of each hardware. Fig. 5 shows a sequence chart of processing executed by the wireless communication system.

The AP 102 performs connection processing complying with the standard of the IEEE802.11 series for each of the STAs 103 to 105 (step S401, F501). That is, frames such as Probe Request/Response, Association Request/Response, and Auth (authentication) are transmitted/received between the AP 102 and each of the STAs 103 to 105, thereby establishing a radio link. Next, the AP 102 decides the number of spatial streams for each of the STAs 103 to 105. The number of spatial streams for each STA can be decided by the signal analysis unit 203 based on information concerning the reception state such as CSI (Channel State Information) received from each STA. Also, the number of spatial streams for each STA may be decided in advance in the wireless communication network or may be decided by an operation of the user (not shown) of the AP 102 on the input unit 304. Next, the AP 102 decides communication parameters including the information concerning the numbers of spatial streams decided in step S402 or F502 and other parameters (information/values), which are included in a radio frame to be transmitted (step S403, F503). Next, the AP 102 transmits data in a form of a radio frame including the decided communication parameters and data to the STAs 103 to 105 (step S404, F504).

### (Frame Structure)

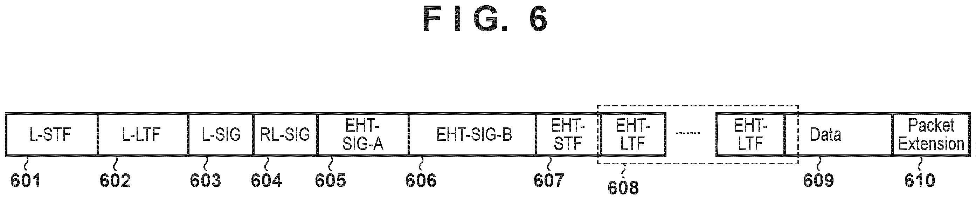

Fig. 6 shows an example of the PHY (physical) frame structure of a PPDU defined by the IEEE802.11EHT standard and transmitted in step S404 or F504. Note that PPDU is an abbreviation of Physical Layer Protocol Data Unit. The head portion of the PPDU shown in Fig. 6 includes an L (Legacy)-STF (Short Training Field) 601, an L-LTF (Long Training Field) 602, and an L-SIG (Signal Field) 603 having backward compatibility with the IEEE802.11a/b/g/n/ax standards. The L-STF 601 is used for detection of a PHY frame signal, automatic gain control (AGC), timing detection, or the like. The L-LTF 602 arranged immediately after the L-STF 601 is used for highly accurate frequency/time synchronization, obtainment of propagation channel information (CSI), or the like. The L-SIG 603 arranged immediately after the L-LTF 602 is used for transmitting control information including information such as a data transmission rate and a PHY frame length. A legacy device complying with the IEEE802.11a/b/g/n/ax standards can decode data of the above-described various kinds of legacy fields (the L-STF 601, the L-LTF 602, and the L-SIG 603).

After the L-SIG 603, the PPDU further includes an RL-SIG 604, an EHT-SIG-A 605, an EHT-SIG-B 606, an EHT-STF 607, an EHT-LTF 608, a data field 609, and a Packet extension 610. The RL-SIG 604 may be absent. The EHT-SIG-A 605 is arranged after the L-SIG 603, the EHT-SIG-B 606 is arranged immediately after the EHT-SIG-A 605, the EHT-STF 607 is arranged immediately after the EHT-SIG-B 606, the EHT-LTF 608 is arranged immediately after the EHT-STF 607. Note that the field including the L-STF 601, the L-LTF 602, the L-SIG 603, the RL-SIG 604, the EHT-SIG-A 605, the EHT-SIG-B 606, the EHT-STF 607, and the EHT-LTF 608 is called a preamble. Note that Fig. 6 shows a frame structure having backward compatibility with the IEEE802.11a/b/g/n/ax standards. If backward compatibility need not be ensured, the fields of the L-STF and the L-LTF may be omitted. Instead, the EHT-STF and the EHT-LTF may be inserted.

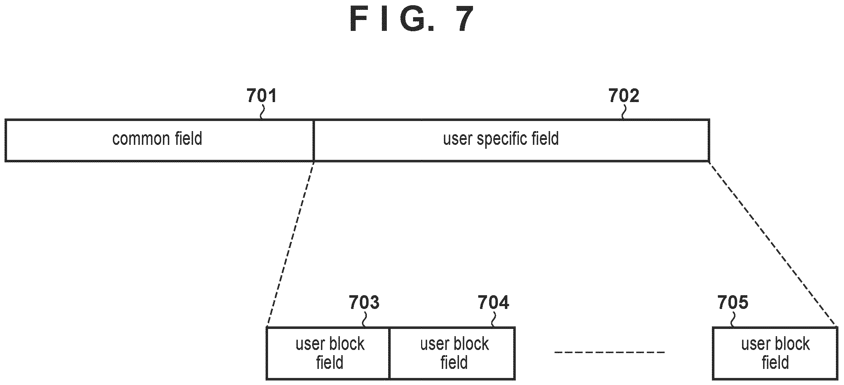

Fig. 7 shows fields that form the EHT-SIG-B 606. The EHT-SIG-B 606 is formed by a Common field 701 and a User specific field 702. The User specific field 702 is formed by connecting User Block fields 703, 704, and 705 corresponding to sub-bands each having a bandwidth of 20 MHz. Subfields that form the User Block field and a description thereof are shown in Table 1.

**[Table 1]**

| | Subfield | Bit Count | Description |
|---|---|---|---|
| User Block field | User field | N × 21 | The contents change depending on whether the allocation is Non-MU MIMO allocation or MU MIMO allocation. |
| | CRC | 4 | CRC calculation value |
| | Tail | 6 | Trailer bit, which is set to 0. |

In Table 1, the bit count of the User field is expressed, using an integer N, as N × 21 bits. If the User Block field is the final user block field in the User specific field, and if it holds information of only one user, N = 1. Otherwise, N = 2.

In the User Block field shown in Table 1, the User field uses a format shown in Table 2 when transmitting data to a plurality of users (STAs) by MU-MIMO. Table 2 shows a description of the subfields of the User field when transmitting data by MU-MIMO. Spatial Configuration indicates the number of spatial streams (the array of spatial streams) allocated to each STA, and 6 bits are ensured for this subfield.

**Table 2**

| | Bit Position | Subfield | Bit Count | Description |
|---|---|---|---|---|
| User field | B0-B10 | STA-ID | 11 | This subfield indicates the ID of an STA or an STA group that is the receiver of the RU of an EHT MU PPDU |
| | B11-B16 | Spatial Configuration | 6 | This subfield indicates the number of Spatial Streams of an STA in MU-MIMO Allocation |
| | B17-B20 | MCS | 4 | This subfield indicates the value of Modulation and Coding Scheme |
| | B21 | Reserved | 1 | Reserved field |
| | B22 | Coding | 1 | When BCC (Binary Convolutional Code) is used, "0" is set. |
| | | | | When LDPC (Low Density Parity Check) is used, "1" is set. |

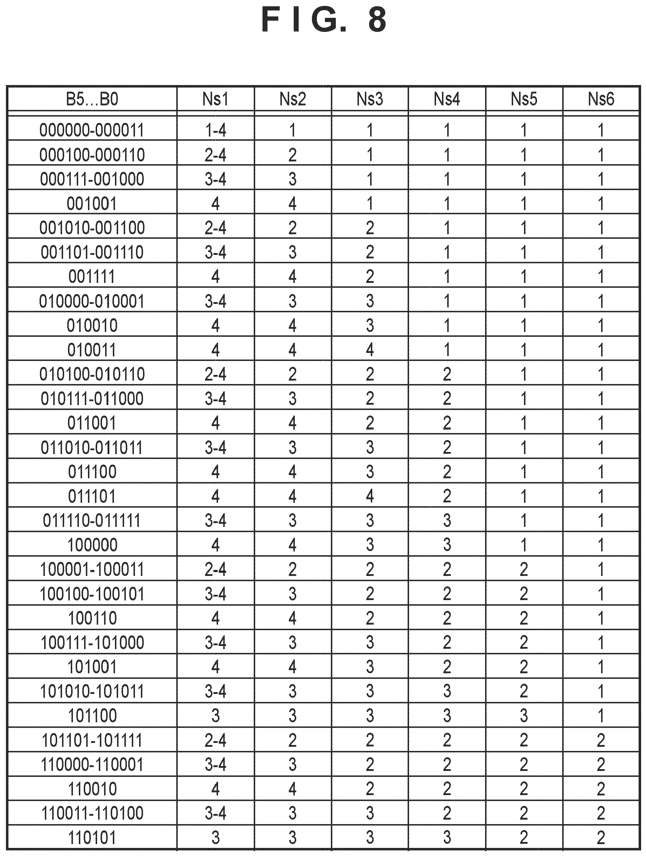

In this embodiment, the maximum number of spatial streams of MU-MIMO is set to 16, and the upper limit of the number of spatial streams (the number of antennas) held by each STA is set to 4. The bit string of the Spatial Configuration subfield indicates the list of the numbers of spatial streams allocated to STAs in a specific number. As an example, Fig. 8 shows the correspondence between the bit string of the Spatial Configuration subfield and the number of streams of each STA in a case in which the number of STAs is 6.

In Fig. 8, the bits of the Spatial Configuration subfield (6 bits) are represented by B5,..., B0 for the description. In addition, Nsi indicates the number of antennas of the ith (i = an ID added to an STA) STA, and the spatial streams are allocated such that concerning i > j, "Nsi is always not less than Nsj" holds. Note that each STA that has received the frame including the subfield grasps the correspondence shown in Fig. 8 and the ID of the STA in the correspondence, thereby detecting, from the frame, the number of spatial streams allocated to the self-STA. Fig. 8 lists all arrays of spatial streams in a case in which the sum of all Nsi (i = 1, 2, 3, 4, 5, and 6) is 16 or less. For example, if the Spatial Configuration subfield is "000000", the number of spatial streams is 1 in all the six STAs. If the Spatial Configuration subfield is "011001", the numbers of spatial streams of the six STAs are 4, 4, 2, 2, 1, and 1. There are a total of 54 patterns of spatial stream arrays. If the number of STAs is less than 6, the number of patterns is less than 54. That is, all patterns of spatial stream arrays can be expressed by 6 bits independently of the number of STAs. Although a detailed correspondence will be omitted, a similar correspondence can be created even if the number of STAs is other than 6.

As described above, according to this embodiment, when 4 or more bits are ensured for the subfield indicating the number of spatial streams allocated to each STA in the EHT-SIG-B, even if the total number of spatial streams is larger than 8, it is possible to notify each STA of the number of allocated spatial streams. Also, there is provided a mechanism configured to include, in the PPDU, the information of the spatial stream array in a case in which the number of users (STAs) is 6, the maximum number of spatial streams of MU-MIMO is 16, and the upper limit of the number of spatial streams (the number of antennas) held by each STA is 4. This makes it possible to communicate the information of the spatial stream array between the AP and each STA.

### <Second Embodiment>

In this embodiment, a case in which the number of users (STAs) is 5, the maximum number of spatial streams of MU-MIMO is 16, and the upper limit of the number of spatial streams (the number of antennas) held by each STA is 8 will be described. Differences from the first embodiment will be described below.

Table 3 shows a description of the subfields of a User field in an EHT-SIG-B 606 when transmitting data by MU-MIMO. Spatial Configuration indicates the number of spatial streams (the array of spatial streams) allocated to each STA, and 8 bits are ensured for this subfield.

**[Table 3]**

| | Bit Position | Subfield | Bit Count | Description |
|---|---|---|---|---|
| User field | B0-B10 | STA-ID | 11 | This subfield indicates the ID of an STA or an STA group that is the receiver of the RU of an EHT MU PPDU |
| | B11-B18 | Spatial Configuration | 8 | This subfield indicates the number of Spatial Streams of an STA in MU-MIMO Allocation |
| | B19-B22 | MCS | 4 | This subfield indicates the value of Modulation and Coding Scheme |
| | B23 | Reserved | 1 | Reserved field |
| | B24 | Coding | 1 | When BCC (Binary Convolutional Code) is used, "0" is set. |
| | | | | When LDPC (Low Density Parity Check) is used, "1" is set. |

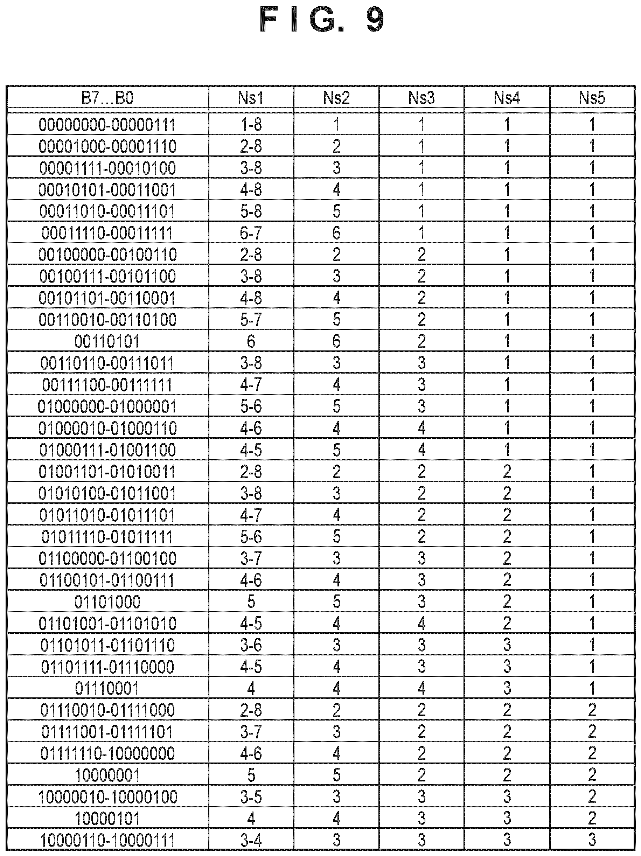

In this embodiment, the maximum number of spatial streams of MU-MIMO is set to 16, and the upper limit of the number of spatial streams (the number of antennas) held by each STA is set to 4. The bit string of the Spatial Configuration subfield indicates the list of the numbers of spatial streams allocated to STAs in a specific number. Fig. 9 shows the correspondence between the bit string of the Spatial Configuration subfield and the number of streams of each STA in a case in which the number of STAs is 8.

In Fig. 9, the bits of the Spatial Configuration subfield (8 bits) are represented by B7,..., B0 for the description. In addition, Nsi indicates the number of antennas of the ith STA, and the spatial streams are allocated such that concerning i > j, "Nsi is always not less than Nsj" holds. Fig. 9 lists all arrays of spatial streams in a case in which the sum of all Nsi (i = 1, 2, 3, 4, and 5) is 16 or less. For example, if the Spatial Configuration subfield is "00000000", the number of streams is 1 in all the five STAs. If the Spatial Configuration subfield is "00110110", the numbers of streams of the five STAs are 3, 3, 3, 1, and 1. There are a total of 136 patterns of spatial stream arrays. If the number of STAs is less than 5, the number of patterns is less than 136. That is, all patterns can be expressed by 8 bits independently of the number of STAs. Although a detailed correspondence will be omitted, a similar correspondence can be created even if the number of STAs is other than 5.

As described above, according to this embodiment, there is provided a mechanism configured to include, in the PPDU, the information of the spatial stream array in a case in which the number of users (STAs) is 5, the maximum number of spatial streams of MU-MIMO is 16, and the upper limit of the number of spatial streams (the number of antennas) held by each STA is 8. This makes it possible to communicate the information of the spatial stream array between the AP and each STA.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application is a divisional application of EP patent application no. 20763969.1 (the "parent application"). The original claims of the parent application are repeated below in the present specification as Clauses and form part of the content of this divisional application as filed.
Clause 1. A communication device including transmission means for transmitting a physical (PHY) frame including a preamble and a data field, characterized in that the preamble includes: a Legacy Short Training Field (L-STF); a Legacy Long Training Field (L-LTF) arranged immediately after the L-STF in the frame; a Legacy Signal Field (L-SIG) arranged immediately after the L-LTF in the frame; a first EHT (Extremely High Throughput) Signal Field (EHT-SIG-A) arranged after the L-SIG in the frame; a second EHT Signal Field (EHT-SIG-B) arranged immediately after the EHT-SIG-A in the frame; an EHT Short Training Field (EHT-STF) arranged immediately after the EHT-SIG-B in the frame; and an EHT Long Training Field (EHT-LTF) arranged immediately after the EHT-STF in the frame, and the EHT-SIG-B includes a subfield indicating the number of spatial streams allocated to each of not less than one other communication device that communicates with the communication device, and the sum of the numbers of spatial streams is larger than 8.
Clause 2. A communication device including reception means for receiving a physical (PHY) frame including a preamble and a data field, characterized in that the preamble includes: a Legacy Short Training Field (L-STF); a Legacy Long Training Field (L-LTF) arranged immediately after the L-STF in the frame; a Legacy Signal Field (L-SIG) arranged immediately after the L-LTF in the frame; a first EHT (Extremely High Throughput) Signal Field (EHT-SIG-A) arranged after the L-SIG in the frame; a second EHT Signal Field (EHT-SIG-B) arranged immediately after the EHT-SIG-A in the frame; an EHT Short Training Field (EHT-STF) arranged immediately after the EHT-SIG-B in the frame; and an EHT Long Training Field (EHT-LTF) arranged immediately after the EHT-STF in the frame, and the EHT-SIG-B includes a subfield indicating the number of spatial streams allocated to the communication device to communicate with another communication device, and the subfield is formed by not less than 4 bits.
Clause 3. The communication device according to clause 1 or 2, characterized in that the subfield is a 6-bit Spatial Configuration subfield included in a User field.
Clause 4. The communication device according to clause 1 or 2, characterized in that the subfield is an 8-bit Spatial Configuration subfield included in a User field.
Clause 5. A control method of a communication device including transmission means for transmitting a physical (PHY) frame including a preamble and a data field, characterized in that the preamble includes: a Legacy Short Training Field (L-STF); a Legacy Long Training Field (L-LTF) arranged immediately after the L-STF in the frame; a Legacy Signal Field (L-SIG) arranged immediately after the L-LTF in the frame; a first EHT (Extremely High Throughput) Signal Field (EHT-SIG-A) arranged after the L-SIG in the frame; a second EHT Signal Field (EHT-SIG-B) arranged immediately after the EHT-SIG-A in the frame; an EHT Short Training Field (EHT-STF) arranged immediately after the EHT-SIG-B in the frame; and an EHT Long Training Field (EHT-LTF) arranged immediately after the EHT-STF in the frame, and the EHT-SIG-B includes a subfield indicating the number of spatial streams allocated to each of not less than one other communication device that communicates with the communication device, and the sum of the numbers of spatial streams is larger than 8.
Clause 6. A control method of a communication device including reception means for receiving a physical (PHY) frame including a preamble and a data field, characterized in that the preamble includes: a Legacy Short Training Field (L-STF); a Legacy Long Training Field (L-LTF) arranged immediately after the L-STF in the frame; a Legacy Signal Field (L-SIG) arranged immediately after the L-LTF in the frame; a first EHT (Extremely High Throughput) Signal Field (EHT-SIG-A) arranged after the L-SIG in the frame; a second EHT Signal Field (EHT-SIG-B) arranged immediately after the EHT-SIG-A in the frame; an EHT Short Training Field (EHT-STF) arranged immediately after the EHT-SIG-B in the frame; and an EHT Long Training Field (EHT-LTF) arranged immediately after the EHT-STF in the frame, and the EHT-SIG-B includes a subfield indicating the number of spatial streams allocated to the communication device to communicate with another communication device, and the subfield is formed by not less than 4 bits.
Clause 7. The control method of the communication device according to clause 5 or 6, characterized in that the subfield is a 6-bit Spatial Configuration subfield included in a User field.
Clause 8. The control method of the communication device according to clause 5 or 6, characterized in that the subfield is an 8-bit Spatial Configuration subfield included in a User field.
Clause 9. A program configured to cause a computer to function as a communication device defined in any one of clauses 1 to 4.

## Claims

1. A communication device comprising:
generation means (202) for generating a physical, PHY, frame including a preamble and a data field; and
transmission means (201) for transmitting the generated PHY frame,
wherein the preamble includes:
a Legacy Short Training Field, L-STF;
a Legacy Long Training Field, L-LTF, arranged immediately after the L-STF in the frame;
a Legacy Signal Field, L-SIG, as a first Signal Field, arranged immediately after the L-LTF in the frame;
a Repeated Legacy Signal Field, RL-SIG, as a second Signal Field, arranged immediately after the L-SIG in the frame,
wherein the communication device being **characterized in that** the preamble further includes:
a third Signal Field arranged after the RL-SIG in the frame;
a fourth Signal Field arranged immediately after the third Signal Field in the frame;
a second Short Training Field arranged immediately after the fourth Signal Field in the frame; and
a second Long Training Field arranged immediately after the second Short Training Field, and
wherein the fourth Signal Field includes a User field, the User field includes at least a subfield indicating numbers of spatial streams allocated to each of two or more other communication devices that communicate with the communication device, the subfield is comprised of consecutive 6 bits, and a sum of the numbers of spatial streams is larger than 8.

2. A communication device, comprising:
reception means (201) for receiving a physical, PHY, frame including a preamble and a data field,
wherein the preamble includes:
a Legacy Short Training Field, L-STF;
a Legacy Long Training Field, L-LTF, arranged immediately after the L-STF in the frame;
a Legacy Signal Field, L-SIG, as a first Signal Field, arranged immediately after the L-LTF in the frame;
a Repeated Legacy Signal Field, RL-SIG, as a second Signal Field, arranged immediately after the L-SIG in the frame,
wherein the communication device being **characterized in that** the preamble further includes:
a third Signal Field arranged after the RL-SIG in the frame;
a fourth Signal Field arranged immediately after the third Signal Field in the frame;
a second Short Training Field arranged immediately after the fourth Signal Field in the frame; and
a second Long Training Field arranged immediately after the second Short Training Field in the frame, and
wherein the fourth Signal Field includes a User field, the User field includes at least a subfield indicating numbers of spatial streams allocated to each of two or more devices including the communication device that communicate with another device, the subfield is comprised of consecutive 6 bits, and a sum of the numbers of spatial streams is larger than 8.

3. The communication device according to claim 1 or 2, **characterized in that** the subfield is a Spatial Configuration subfield included in the User field in the fourth Signal Field.

4. The communication device according to claim 1, **characterized in that** the subfield is a Spatial Configuration subfield included in the User field in the fourth Signal Field,
wherein the PHY frame is a Multi-User, MU, Physical Layer Protocol Data Unit, PPDU, frame,
wherein for bit strings stored in the Spatial Configuration subfield, in a case where a total number of spatial streams allocated for N other communication devices is a predetermined number M that is equal to or less than 16, and where a first bit string indicates first allocation of spatial streams for each of the N other communication devices, a second bit string obtained by adding 1 in binary to the first bit string indicates second allocation of spatial streams for each of the N other communication devices, and
wherein a third bit string obtained by adding 1 in binary to the second bit string indicates third allocation of spatial streams for each of the N other communication devices.

5. The communication device as claimed in claim 4, wherein a set of a plurality of bit strings that can be set in the Spatial Configuration subfield represent a plurality of patterns of spatial stream arrays.

6. The communication device according to any one of claims 1 to 5, **characterized in that** a 17th bit from a head of the User field is included in one of the consecutive 6 bits.

7. A control method of a communication device comprising:
generating (S404, F504) a physical, PHY, frame including a preamble and a data field; and
transmitting (S404, F504) the generated PHY frame,
wherein the preamble includes:
a Legacy Short Training Field, L-STF;
a Legacy Long Training Field, L-LTF, arranged immediately after the L-STF in the frame;
a Legacy Signal Field, L-SIG, as a first Signal Field, arranged immediately after the L-LTF in the frame;
a Repeated Legacy Signal Field, RL-SIG, as a second Signal Field, arranged immediately after the L-SIG in the frame,
wherein the control method being **characterized in that** the preamble further includes:
a third Signal Field arranged after the RL-SIG in the frame;
a fourth Signal Field arranged immediately after the third Signal Field in the frame;
a second Short Training Field arranged immediately after the fourth Signal Field in the frame; and
a second Long Training Field arranged immediately after the second Short Training Field in the frame, and
wherein the fourth Signal Field includes a User field, the User field includes at least a subfield indicating numbers of spatial streams allocated to each of two or more other communication devices that communicate with the communication device, the subfield is comprised of consecutive 6 bits, and the sum of the numbers of spatial streams is larger than 8.

8. A control method of a communication device comprising:
receiving (F504) a physical, PHY, frame including a preamble and a data field,
wherein the preamble includes:
a Legacy Short Training Field, L-STF;
a Legacy Long Training Field, L-LTF, arranged immediately after the L-STF in the frame;
a Legacy Signal Field, L-SIG, as a first Signal Field, arranged immediately after the L-LTF in the frame;
a Repeated Legacy Signal Field, RL-SIG, as a second Signal Field, arranged immediately after the L-SIG in the frame,
wherein the control method being **characterized in that** the preamble further includes:
a third Signal Field arranged after the RL-SIG in the frame;
a fourth Signal Field arranged immediately after the third Signal Field in the frame;
a second Short Training Field arranged immediately after the fourth Signal Field in the frame; and
a second Long Training Field arranged immediately after the second Short Training Field in the frame, and
wherein the fourth Signal Field includes a User field, the User field includes at least a subfield indicating numbers of spatial streams allocated to each of two or more devices including the communication device that communicate with another device, the subfield is comprised of consecutive 6 bits, and the sum of the numbers of spatial streams is larger than 8.

9. The control method of the communication device according to claim 7 or 8, **characterized in that** the subfield is a Spatial Configuration subfield included in the User field in the fourth Signal Field.

10. The control method of the communication device according to claim 7, **characterized in that** the subfield is a Spatial Configuration subfield included in the User field in the fourth Signal Field,
wherein the PHY frame is a Multi-User, MU, Physical Layer Protocol Data Unit, PPDU, frame,
wherein for bit strings stored in the Spatial Configuration subfield, in a case where a total number of spatial streams allocated for N other communication devices is a predetermined number M that is equal to or less than 16, and where a first bit string indicates first allocation of spatial streams for each of the N other communication devices, a second bit string obtained by adding 1 in binary to the first bit string indicates second allocation of spatial streams for each of the N other communication devices, and
wherein a third bit string obtained by adding 1 in binary to the second bit string indicates third allocation of spatial streams for each of the N other communication devices.

11. The control method of the communication device according to any one of claims 7 to 10, **characterized in that** a 17th bit from a head of the User field is included in one of the consecutive 6 bits.

12. A program configured to cause a computer to function as a communication device defined in any one of claims 1 to 6.
